# EUROPÄISCHE PATENTSCHRIFT

(11) **EP 3 757 416 B1**
(45) Veröffentlichungstag und Bekanntmachung des Hinweises auf die Patenterteilung: **18.01.2023**
(21) Anmeldenummer: 20174870.4
(22) Anmeldetag: 15.05.2020
(51) Int. Cl.: F16D 28/00

(54) **SCHALTBARE GETRIEBEANORDNUNG**
SWITCHABLE TRANSMISSION ASSEMBLY
AGENCEMENT DE TRANSMISSION COMMUTABLE

(30) Priorität: 25.06.2019 DE 102019209180
(43) Veröffentlichungstag der Anmeldung: 30.12.2020
(73) Patentinhaber: VOLKSWAGEN AG, 38440 Wolfsburg (DE)
(72) Erfinder: Möckel, Jörg, 38524 Sassenburg (DE); Ebert, Dr. Falk, 38104 Braunschweig (DE); Petersen, Rainer, 38444 Wolfsburg (DE); Hanke, Stefan, 38126 Braunschweig (DE)

(56) Entgegenhaltungen:
- EP-A1- 2 679 346
- CN-A- 101 273 212
- DE-A1-102004 058 475

## Beschreibung

Die Erfindung bezieht sich auf eine schaltbare Getriebeanordnung, umfassend ein Gehäuse sowie ein außen steckverzahntes Zentralrad und ein einerseits des Zentralrades angeordnetes, gleichartig außen steckverzahntes, um dieselbe Rotationsachse drehbares, erstes Koppelrad, die mittels einer sie koaxial umgreifenden, korrespondierend innen steckverzahnten, axial verschieblichen ersten Schaltmuffe drehmomentübertragend miteinander koppelbar sind, wobei die erste Schaltmuffe drehentkoppelt und axial fest in einer koaxialen, ersten Schiebehülse gelagert ist, welche wenigstens einen nach radial außen gerichteten Führungszapfen aufweist, der in eine erste Führungsausnehmung einer Schaltwalze eingreift.

Eine derartige Getriebeanordnung, die allgemein als Schaltmuffenanordnung bekannt ist, ist beispielsweise in der DE 10 2004 058 475 A1 offenbart, ohne dass dort auf die konstruktiven Details eingegangen würde.

Eine in der Getriebetechnik häufig auftretende Aufgabenstellung besteht darin, zwei koaxiale, axial benachbart zueinander angeordnete Räder schaltbar miteinander zu koppeln, d.h. bedarfsweise drehmomentübertragend miteinander zu verbinden oder zu trennen. Es kann sich hierbei, wie bei der gattungsbildenden Druckschrift, um ein auf einer Welle fixiertes Festrad und ein auf derselben Welle gelagertes Losrad handeln. Denkbar sind jedoch auch schaltbare Kopplungen zwischen Elementen eines Planetensatzes. Aus später noch klarer werdenden Gründen sei eines der Räder hier als Zentral-, das andere als Koppelrad bezeichnet, wobei dies zunächst keinerlei konstruktive Festlegung impliziert. Die miteinander zu koppelnden Räder weisen eine gleichartige Außenverzahnung auf und werden koaxial von einer korrespondierend innenverzahnten Schaltmuffe umgriffen. Die Schaltmuffe ist axial verschieblich gelagert. In einer beide Räder überlappenden Axialposition der Schaltmuffe, in der ihre Innenverzahnung in die Außenverzahnungen beider Räder eingreift, sind Zentral- und Koppelrad drehmomentübertragend miteinander verbunden. In Axialpositionen hingegen, in denen die Schaltmuffe höchstens eines der beiden Räder axial überlappt, sind Zentral- und Koppelrad voneinander getrennt. Eine Problematik bei der Axialverschiebung der Schaltmuffe besteht darin, dass der Ausrückmechanismus typischerweise gehäusefest angeordnet ist, wohingegen die Schaltmuffe selbst aufgrund des Zahneingriffs mit dem bzw. den Rädern rotiert. Daher ist meist eine axial feste Drehentkopplung zu einer die Schaltmuffe koaxial umgreifenden Schiebehülse vorgesehen. Beispielsweise kann die Schaltmuffe mittels eines Rillenkugellagers in der Schiebehülse gelagert sein. Eine Axialverschiebung der Schiebehülse führt also zu einer gleichartigen Axialverschiebung der Schaltmuffe, wobei allerdings deren Rotation nicht auf die Schiebehülse übertragen wird. Zur Axialausrückung der Schiebehülse ist es bekannt, diese mit wenigstens einem nach radial außen gerichteten Führungszapfen zu versehen, der seinerseits in eine Führungsausnehmung, z.B. eine Führungsnut oder ein Führungsschlitz, einer Schaltwalze eingreift. Bei der Vorrichtung der gattungsbildenden Druckschrift ist die Schaltwalze als ein parallel zu den vorgenannten, koaxialen Elementen gelagerter Zylinder ausgebildet, in dessen Außenwand sich die gebogene Führungsausnehmung im Wesentlichen in Umfangsrichtung erstreckt. Sie bildet dabei eine lateral ausschwingende Führungskurve, in welche der Führungszapfen der Schiebehülse axial formschlüssig eingreift. Eine Rotation der Schaltwalze führt somit bei drehfest am Gehäuse gelagerter Schiebehülse zu einer der Kurvenform der Führungsausnehmung entsprechenden Axialverschiebung der Schiebehülse und damit der Schaltmuffe. Nachteilig bei dieser Ausgestaltung ist der radial große Bauraum, der durch die parallele Anordnung der Schaltwalze zu den übrigen Elementen der Schaltvorrichtung bedingt ist.

Aus der CN 101 273 212 A ist eine schaltbare Getriebeanordnung zur Betätigung zweier koaxial angeordneter Kupplungen bekannt, die mittels ebenfalls koaxial angeordneter, hohlzylindrisch ausgebildeter Betätigungskolben betätigbar sind. Zur Betätigung der Kupplungen müssen die Betätigungskolben in axialer Richtung ausgerückt werden. Um dies zu erreichen, weisen die Betätigungskolben ungerade, gebogene Führungsschlitze auf. In diese Führungsschlitze greifen Führungszapfen ein, die an einem außenverzahnten Zahnrad befestigt sind, welches die Betätigungskolben koaxial umgreift. Das Zahnrad wird mittels einer motorgetriebenen Spindel in Rotation versetzt, deren Schneckenverzahnung in die Außenverzahnung des Zahnrades eingreift. Bei der Rotation des Zahnrads rotieren die am Zahnrad befestigten Führungszapfen mit. Die Betätigungskolben hingegen sind rotationsfest, sodass die Führungszapfen bei der Rotation des Zahnrads durch die gebogenen Führungsschlitze der Betätigungskolben gleiten, wodurch die Betätigungskolben zu einer Axialbewegung gezwungen werden. Auf diese Weise werden die Kupplungen betätigt. Nachteilig bei dieser Ausgestaltung ist, dass die Montage aufwendig ist.

Es ist die Aufgabe der vorliegenden Erfindung, eine gattungsgemäße Getriebeanordnung derart weiterzubilden, dass ein geringerer radialer Bauraum benötigt wird.

Diese Aufgabe wird in Verbindung mit den Merkmalen des Oberbegriffs von Anspruch 1 dadurch gelöst, dass der Führungszapfen in tangential formschlüssiger Weise einen ersten Axialschlitz einer koaxialen, axial fest und rotierbar am Gehäuse gelagerten Drehhülse durchsetzt und die Schaltwalze als eine gehäusefeste, die Drehhülse axialbereichsweise, koaxial umgreifende Führungshülse ausgebildet ist, an deren Innenumfang sich die erste Führungsausnehmung in Umfangsrichtung erstreckt, wobei die Drehhülse in einem von der Führungshülse radial nicht überdeckten Axialbereich eine sich in Umfangsrichtung erstreckende Schneckenverzahnung aufweist, die mit einer um ihre Spindelachse rotierbar am Gehäuse gelagerten Gewindespindel kämmt.

Bevorzugte Ausführungsformen der Erfindung sind Gegenstand der abhängigen Patentansprüche.

Die Erfindung kombiniert drei konstruktive Aspekte zu einer besonders vorteilhaften, funktionalen Wirkung. Ein erster Aspekt betrifft die Gestaltung der Schaltwalze als hohlzylindrische Führungshülse, die die übrigen Elemente koaxial umgreift. Die Führungsausnehmung ist, anders als beim Stand der Technik, nicht in die Außen- sondern in die Innenwandung eingegraben. Dies führt neben dem offensichtlichen radialen Bauraumvorteil zu dem weiteren Vorteil, dass die axialkraftübertragende Verbindung zwischen der Schiebehülse und der Führungshülse nicht auf einen einzigen Führungszapfen beschränkt sein muss; vielmehr können mehrere über den Umfang verteilte Führungszapfen vorgesehen sein, die an unterschiedlichen Stellen in die (dann periodisch auszugestaltende) Führungsausnehmung eingreifen können. Dies führt zu einer Vergleichmäßigung der Krafteinleitung, die einem Verkanten entgegenwirkt.

Ein zweiter Aspekt betrifft die gehäusefeste Anordnung der Führungshülse, was zunächst wiedersinnig erscheinen mag. Im Stand der Technik stellt die dortige Schaltführungswalze das eigentliche Betätigungsorgan dar, durch dessen Rotation die gewünschte Schaltung bewirkt wird. Eine Übernahme dieses Konzeptes auf die koaxiale Gestaltung der vorliegenden Erfindung hätte allerdings den Nachteil, dass das radial äußere Element der Schaltvorrichtung, nämlich die Führungshülse, relativ zu dem Getriebegehäuse drehbar gelagert sein müsste, was konstruktiv höchst aufwändig wäre. Die Erfindung sieht daher gemäß dem zweiten Aspekt eine gehäusefeste Anordnung dieses radial äußersten Elementes vor und kompensiert den dabei eingebüßten Bewegungsfreiheitsgrad durch ein zusätzliches Element. So ist erfindungsgemäß radial zwischen der Schiebehülse und der Führungshülse eine Drehhülse vorgesehen, die zwar axial fest aber zugleich rotierbar am Gehäuse gelagert ist. Diese Drehhülse weist einen Axialschlitz auf, durch welchen hindurch sich der Führungszapfen von seinem Fuß an der Schiebehülse zu seinem Kopf, der in die Führungsausnehmung in der Innenwand der Führungshülse eingreift, erstreckt. Die Breite des Axialschlitzes der Drehhülse ist derart auf den Durchmesser des Führungszapfens abgestimmt, dass letzterer ersteren in Umfangsrichtung formschlüssig durchgreift. Mit anderen Worten führt eine Rotation der Drehhülse spielfrei zu einer entsprechenden Rotation des Führungszapfens und mit ihm der Schiebehülse, wobei der Führungszapfen durch die Kurvenform der Führungsausnehmung zu einer Axialbewegung gezwungen wird, die von dem Axialschlitz in der Drehhülse zugelassen wird. Das eigentliche Betätigungsorgan der erfindungsgemäßen Schaltvorrichtung ist also besagte Drehhülse, durch deren gezielte Drehung der Führungszapfen in denjenigen Bereich der feststehenden Führungsausnehmung gedreht werden kann, dessen axiale Auslenkung der gewünschten Axialverschiebung der Schiebehülse und daher dem gewünschten Koppelzustand der Schaltmuffe entspricht.

Zur konkreten (Dreh-)Betätigung der Drehhülse sieht die Erfindung gemäß ihrem dritten Aspekt vor, dass auf der Außenwand der Drehhülse eine sich in Umfangsrichtung erstreckende Schneckenverzahnung angeordnet ist. Diese erstreckt sich in einem Axialbereich der Drehhülse, der von der Führungshülse nicht umgriffen, d.h. von radial außen zugänglich ist. Beispielsweise kann ein entsprechendes Fenster in der Führungshülse vorgesehen sein. In besagte Schneckenverzahnung greift die Verzahnung einer Spindel ein, welche im Wesentlichen tangential zu den übrigen Elementen der Schaltungsanordnung und rotierbar am Gehäuse gelagert und vorzugsweise von einem elektrischen Stellmotor angetrieben ist.

Die erläuterten drei Aspekte der vorliegenden Erfindung führen also zu einer schaltbaren Getriebeanordnung, die radial extrem kleinbauend ist und aufgrund des selbsthemmenden Schneckenantriebs in beide Drehrichtungen schnell und sehr präzise einstellbar ist.

Eine Weiterbildung der Erfindung sieht die wahlweise Kopplung des Zentralrades mit einem oder beiden von zwei Koppelrädern vor, die auf unterschiedlichen axialen Seiten des Zentralrades angeordnet sind. Diese Anordnung macht auch die Terminologie eines "Zentralrades" zwischen zwei Koppelrädern verständlich.

Speziell sieht die genannte Weiterbildung vor, dass andererseits des Zentralrades (d.h. auf der Seite, auf der das erste Koppelrad nicht angeordnet ist) ein gleichartig außen steckverzahntes, um dieselbe Rotationsachse drehbares, zweites Koppelrad angeordnet ist, welches mittels einer das zweite Koppelrad und das Zentralrad koaxial umgreifenden, korrespondierend innen steckverzahnten, axial verschieblichen, zweiten Schaltmuffe drehmomentübertragend mit dem Zentralrad koppelbar ist, wobei die zweite Schaltmuffe drehentkoppelt und axial fest in einer koaxialen, zweiten Schiebehülse gelagert ist, welche wenigstens einen nach radial außen gerichteten Führungszapfen aufweist, der in tangential formschlüssiger Weise einen zweiten Axialschlitz der Drehhülse durchsetzt und in eine sich in Umfangsrichtung erstreckende, zweite Führungsausnehmung der Führungshülse eingreift.

Der oben im Kontext des ersten Koppelrades ausführlich erläuterte Schaltmechanismus wird also bei dieser Weiterbildung der Erfindung verdoppelt, wobei beide Teilvorrichtungen das Zentralrad, die Drehhülse und die Führungshülse gemeinsam nutzen. Die Drehhülse weist allerdings für jede der Teilvorrichtungen einen eigenen Axialschlitz auf, wobei beide Axialschlitze selbstverständlich auch als zwei Axialabschnitte eines durchgehenden Axialschlitzes ausgebildet sein können. Ebenso sind in der Führungshülse zwei Führungsausnehmungen, nämlich für jede Teilvorrichtung eine, vorgesehen. Durch die grundsätzlich unabhängige Wahl der Kurvenformen der beiden Führungsausnehmungen können beliebige, grundsätzlich voneinander unabhängige Schaltfolgen der Kopplungen der beiden Koppelräder mit dem Zentralrad realisiert werden.

Bei einer Weiterbildung der erfindungsgemäßen schaltbaren Getriebeanordnung ist bevorzugt vorgesehen, dass die Führungshülse einen die erste Führungsausnehmung tragenden, ersten Axialbereich und einen die zweite Führungsausnehmung tragenden, zweiten Axialbereich aufweist, zwischen denen ein Spalt gebildet ist, in den hinein sich die Schneckenverzahnung der Drehhülse von radial innen her erstreckt. Mit anderen Worten ist die Einleitung der Betätigungskraft, d.h. die Einleitung des Drehmomentes auf die Drehhülse, an axial mittiger Position vorgesehen, was aus Symmetrie- und Lagerungsgründen vorteilhaft ist. Besagter Spalt kann in Umfangsrichtung begrenzt sein. Mit anderen Worten kann in der Führungshülse ein Fenster ausgebildet sein, durch welches die Schneckenverzahnung für die Betätigungsspindel zugänglich ist.

Ein besonders bevorzugter Anwendungsbereich der erfindungsgemäßen Getriebeanordnung ist die Kopplung zweier Planetensätze. So ist bevorzugt vorgesehen, dass jedes Koppelrad das Hohlrad eines jeweils eine Sonne, ein Hohlrad und einen Steg mit Planetenrädern umfassenden Planetensatzes ist, wobei, besonders bevorzugt, das Zentralrad ein mit dem Steg eines der Planetensätze verbundenes Rad ist. Mit anderen Worten erlaubt eine solche Ausführungsform die Kopplung beider Planetensätze miteinander und alternativ oder zusätzlich die Verblockung eines der Planetensätze durch Kopplung zweier seiner Elemente miteinander.

Alternativ oder zusätzlich kann vorgesehen sein, dass das Zentralrad ein mit der Sonne eines der Planetensätze drehfest verbundenes Rad ist. Insbesondere kann das Zentralrad mit einer Welle verbunden sein, die die Sonne des ersten Planetensatzes mit dem Steg des zweiten Planetensatzes verbindet.

Weitere Einzelheiten und Vorteile der Erfindung ergeben sich aus der nachfolgenden, speziellen Beschreibung und den Zeichnungen.

Es zeigen:
- Figur 1:: eine schematische Darstellung einer bevorzugten Getriebeanordnung zur Anwendung der vorliegenden Erfindung,
- Figur 2:: eine schematische Darstellung von vier Schaltstellungen des Schaltmechanismus einer erfindungsgemäßen Getriebeanordnung sowie
- Figur 3:: eine teilweise geschnittene, perspektivische Ansicht einer Ausführungsform, welche den Schaltmechanismus von Figur 2 mit der Getriebeanordnung von Figur 1 kombiniert.

Gleiche Bezugszeichen in den Figuren weisen auf gleiche oder analoge Elemente hin.

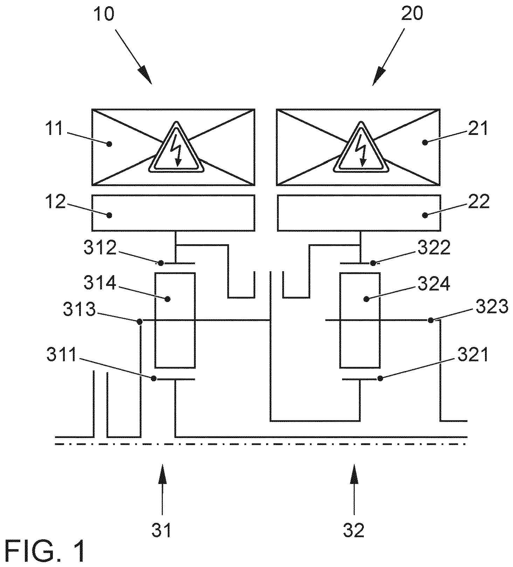

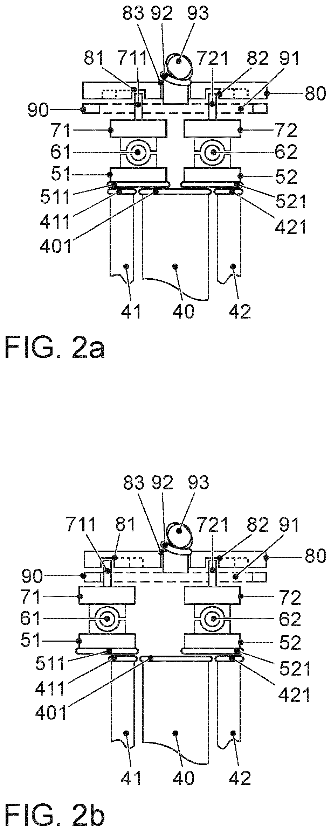

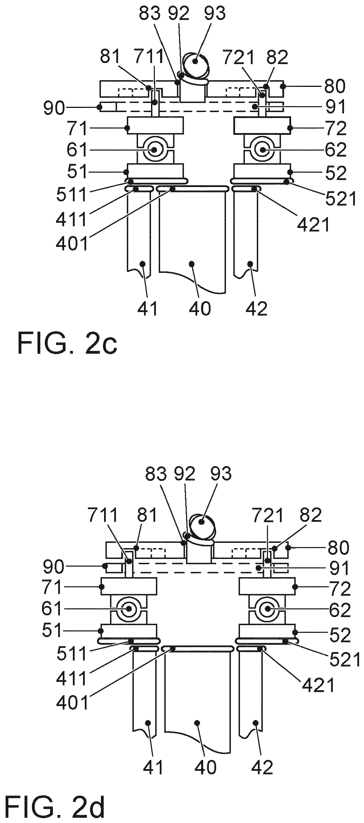

Figur 1 zeigt in stark schematisierter Darstellung eine Getriebetopologie, die sich in besonderer Weise zum Einsatz als Basisstruktur der vorliegenden Erfindung eignet. Die dargestellte Getriebeanordnung umfasst zwei elektrische Maschinen 10, 20 mit jeweils einem gehäusefesten Stator 11, 21 und einem drehbar im Stator 11, 21 gelagerten Rotor 12, 22. Die elektrischen Maschinen 10, 20 sind koaxial zueinander und einander benachbart angeordnet. Jede der elektrischen Maschinen 10, 20, insbesondere ihr Rotor 12, 22 ist an einen zugeordneten Planetensatz 31, 32 angeschlossen. Jeder Planetensatz 31, 32 umfasst eine Sonne 311, 321, ein Hohlrad 312, 322 und einen Steg 313, 323, auf dem jeweils ein Satz Planetenräder 314, 324 gelagert ist. Die Planetenräder 314, 324 kämmen in üblicher Weise einerseits mit der zugeordneten Sonne 311, 321 und andererseits mit dem zugeordneten Hohlrad 312, 322. Bei der dargestellten Ausführungsform ist der Steg 313 des ersten Planetensatzes 31 fest mit der Sonne 321 des zweiten Planetensatzes 32 verbunden. Mittels einer in Figur 1 nicht im Detail dargestellten Schaltanordnung lassen sich die Hohlräder 312, 322, die jeweils mit dem Rotor 12, 22 der zugeordneten elektrischen Maschine 10, 20 verbunden sind, temporär mit der den ersten Steg 313 und die zweite Sonne 321 verbindenden Welle koppeln. Funktional umfasst die weiter unten, insbesondere im Kontext von Figur 2, noch näher zu beschreibende Schaltanordnung zwei Kupplungen, deren erste das Hohlrad 312 des ersten Planetensatzes 31 mit dessen Steg 313 koppelt und deren zweite das Hohlrad 322 des zweiten Planetensatzes 32 mit dessen Sonne 321 koppelt. Die beiden Kupplungen arbeiten grundsätzlich unabhängig voneinander, können jedoch, wie nachfolgend erläutert, in vorgegebenem Verhältnis zueinander geschaltet werden. Das Schließen jeder einzelnen Kupplung bedeutet eine Verblockung des zugeordneten Planetensatzes.

Figur 2 zeigt stark schematisiert den eigentlichen Schaltmechanismus einer erfindungsgemäßen Getriebeanordnung in seinen vier möglichen Stellungen. Die miteinander koppelbaren Elemente seien hier allgemein als ein Zentralrad 40, ein erstes Koppelrad 41 und ein zweites Koppelrad 42 beschrieben. Bei dem Zentralrad 40 kann es sich um ein Rad handeln, welches auf derjenigen Welle fixiert ist, welche in Figur 1 den ersten Planetensatz 31, insbesondere dessen Steg 313, mit dem zweiten Planetensatz 32, insbesondere dessen Sonne 321, verbindet. Bei den Koppelrädern 41 kann es sich um Räder handeln, die fest mit den Hohlrädern 312, 322 der Getriebeanordnung von Figur 1 verbunden sind. Das Zentralrad 40 und die Koppelräder 41, 42 weisen gleichartige Außen-Steckverzahnungen 401, 411, 421 auf.

Weiter sind zwei Schaltmuffen 51, 52 vorgesehen, die das Zentralrad 40 und die Koppelräder 41, 42 koaxial umgreifen und an ihren Innenflächen jeweils eine Innen-Steckverzahnung 511, 521 aufweisen, die mit den Außen-Steckverzahnungen 401, 411, 421 des Zentralrades 40 bzw. der Koppelräder 41, 42 korrespondieren. Wie in den unterschiedlichen Schaltstellungen der Teilfiguren a, b, c und d von Figur 2 gezeigt, kann also mittels Axialverschiebung der Schaltmuffen 51, 52 eine temporäre Kopplung zwischen dem Zentralrad 40 und je einem der Koppelräder 41, 42 temporär geschaffen bzw. getrennt werden.

Hierzu ist jede Schaltmuffe 51, 52 über ein axialkraftübertragendes und zugleich drehentkoppelndes Lager 61, 62, beispielsweise ein Rillenkugellager, in einer zugeordneten, koaxialen Schiebehülse 71, 72 gelagert. Jede Schiebehülse 71, 72 weist einen nach radial außen ragenden Führungszapfen 711, 721 auf, der in eine ihm zugeordnete Führungsnut 81, 82 in der Innenfläche einer koaxial und gehäusefest angeordneten Führungshülse 80 ausgeformt ist. Die Führungsnuten 81, 82 stellen gebogene, sich jedoch im Wesentlichen in Umfangsrichtung erstreckende Nuten dar. Bei einer Rotation der Schiebehülsen 71, 72 um die gemeinsame Zentralachse und relativ zum Gehäuse gleiten die Führungszapfen 711, 721 in den zugeordneten Führungsnuten 81, 82 und werden, deren Kurvenform folgend, axial verschoben. Diese Axialverschiebung überträgt sich über die Lager 61, 62 auf die zugeordneten Schaltmuffen 51, 52, sodass sich insgesamt der Schaltzustand der Anordnung verändert, wie in den Teilfiguren a, b, c und d von Figur 2 gezeigt.

Der Schaltzustand hängt also von der relativen Winkellage der Schiebehülsen 71, 72 zur gehäusefesten Führungshülse 80 ab. Diese Winkellage muss zur Durchführung eines Schaltvorgangs präzise eingestellt werden. Hierzu ist radial zwischen den Schiebehülsen 71, 72 einerseits und der gehäusefesten Führungshülse 80 andererseits eine koaxiale Drehhülse 90 vorgesehen. Diese ist drehbar, jedoch axial fest am Gehäuse gelagert. Die Drehhülse 90 weist einen axial orientierten Schlitz 91 auf, der von den Führungszapfen 711, 721 radial durchsetzt wird. In tangentialer Richtung sind die Führungszapfen 711, 721 vorzugsweise spielfrei, formschlüssig in dem Axialschlitz gelagert. Eine axiale Relativbewegung zur Drehhülse 90 bzw. zur Führungshülse 80 wird aufgrund des Axialschlitzes 91 jedoch nicht beeinträchtigt. Eine gezielte Rotation der Drehhülse 90 wird also über den Axialschlitz 91 auf die Führungszapfen 711, 721 übertragen, die sodann, der Kurvenform der Führungsnuten 81, 82 folgend, in eine von dem Axialschlitz 91 unbeeinträchtigte Axialbewegung gezwungen werden.

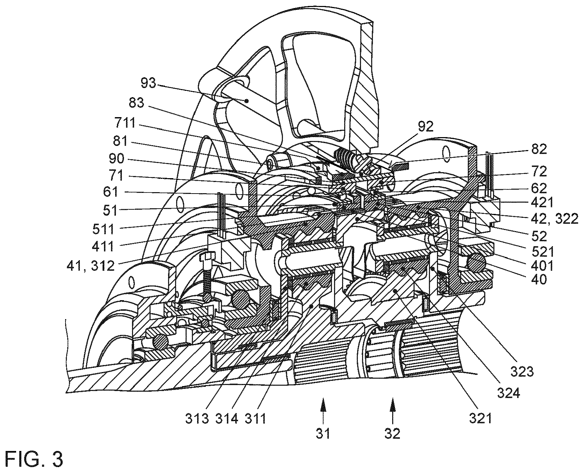

Zur gezielten Drehansteuerung der Drehhülse 90 weist diese in ihrem axialen Zentralbereich eine gratartig ausgestaltete Schneckenverzahnung 92 auf, die ein korrespondierendes Fenster 83 in der Führungshülse 80 radial durchsetzt. Die Schneckenverzahnung 92 wird daher von radial außen her für eine korrespondierend verzahnte Spindel 93 zugänglich, die rotierbar am Gehäuse gelagert und von einem nicht dargestellten elektrischen Stellmotor angetrieben ist. Figur 3 zeigt eine teilweise geschnittene, perspektivische Darstellung einer erfindungsgemäßen Getriebeanordnung mit der Topologie der Anordnung von Figur 1 und mit einer konkreten, konstruktiven Ausführungsform der Schaltanordnung von Figur 2. Die Bezüge zu den Figuren 1 und 2 sind über die Bezugszeichen offensichtlich. Hinsichtlich der Struktur und Funktionsweise wird auf die obigen Erläuterungen zu Figur 1 und 2 verwiesen.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. Insbesondere ist die erfindungswesentliche Schaltanordnung unabhängig von der Topologie auf beliebige Getriebestrukturen anwendbar.

### Bezugszeichenliste

- 10: erste elektrische Maschine
- 11: Stator von 10
- 12: Rotor von 10
- 20: zweite elektrische Maschine
- 21: Stator von 20
- 22: Rotor von 20
- 31: erster Planetensatz
- 311: Sonne von 31
- 312: Hohlrad von 31
- 313: Steg von 31
- 314: Planetenrad von 31
- 32: zweiter Planetensatz
- 321: Sonne von 32
- 322: Hohlrad von 32
- 323: Steg von 32
- 324: Planetenrad von 32
- 40: Zentralrad
- 401: Außen-Steckverzahnung von 40
- 41: erstes Koppelrad
- 411: Außen-Steckverzahnung von 41
- 42: zweites Koppelrad
- 421: Außen-Steckverzahnung von 42
- 51: erste Schaltmuffe
- 511: Innen-Steckverzahnung von 51
- 52: zweite Schaltmuffe
- 521: Innen-Steckverzahnung von 52
- 61: erstes Lager
- 62: zweites Lager
- 71: erste Schiebehülse
- 711: Führungszapfen von 71
- 72: zweite Schiebehülse
- 721: Führungszapfen von 72
- 80: Führungshülse
- 81: erste Führungsnut
- 82: zweite Führungsnut
- 83: Fenster
- 90: Drehhülse
- 91: Axialschlitz
- 92: Schneckenverzahnung
- 93: Gewindespindel

## Patentansprüche

1. Schaltbare Getriebeanordnung, umfassend ein Gehäuse sowie ein außen steckverzahntes Zentralrad (40) und ein einerseits des Zentralrades (40) angeordnetes, gleichartig außen steckverzahntes, um dieselbe Rotationsachse drehbares, erstes Koppelrad (41), die mittels einer sie koaxial umgreifenden, korrespondierend innen steckverzahnten, axial verschieblichen ersten Schaltmuffe (51) drehmomentübertragend miteinander koppelbar sind, wobei die erste Schaltmuffe (51) drehentkoppelt und axial fest in einer koaxialen, ersten Schiebehülse (71) gelagert ist, welche wenigstens einen nach radial außen gerichteten Führungszapfen (711) aufweist, der in eine erste Führungsausnehmung (81) einer Schaltwalze eingreift,
**dadurch gekennzeichnet,**
**dass** der Führungszapfen (711) in tangential formschlüssiger Weise einen Axialschlitz (91) einer koaxialen, axial fest und rotierbar am Gehäuse gelagerten Drehhülse (90) durchsetzt und die Schaltwalze als eine gehäusefeste, die Drehhülse (90) axialbereichsweise, koaxial umgreifende Führungshülse (80) ausgebildet ist, an deren Innenumfang sich die erste Führungsausnehmung (81) in Umfangsrichtung erstreckt, wobei die Drehhülse (90) in einem von der Führungshülse (80) radial nicht überdeckten Axialbereich eine sich in Umfangsrichtung erstreckende Schneckenverzahnung (92) aufweist, die mit einer um ihre Spindelachse rotierbar am Gehäuse gelagerten Gewindespindel (93) kämmt.

2. Schaltbare Getriebeanordnung nach Anspruch 1,
**dadurch gekennzeichnet,**
**dass** die Gewindespindel (93) mit einem elektrischen Stellmotor gekoppelt ist, mittels dessen sie motorisch rotierbar ist.

3. Schaltbare Getriebeanordnung nach einem der vorangehenden Ansprüche,
**dadurch gekennzeichnet,**
**dass** andererseits des Zentralrades (40) ein gleichartig außen steckverzahntes, um dieselbe Rotationsachse drehbares, zweites Koppelrad (42) angeordnet ist, welches mittels einer das zweite Koppelrad (42) und das Zentralrad (40) koaxial umgreifenden, korrespondierend innen steckverzahnten, axial verschieblichen, zweiten Schaltmuffe (52) drehmomentübertragend mit dem Zentralrad (40) koppelbar ist, wobei die zweite Schaltmuffe (52) drehentkoppelt und axial fest in einer koaxialen, zweiten Schiebehülse (72) gelagert ist, welche wenigstens einen nach radial außen gerichteten Führungszapfen (721) aufweist, der in tangential formschlüssiger Weise einen Axialschlitz (91) der Drehhülse (90) durchsetzt und in eine sich in Umfangsrichtung erstreckende zweite Führungsausnehmung (82) der Führungshülse (80) eingreift.

4. Schaltbare Getriebeanordnung nach einem der vorangehenden Ansprüche,
**dadurch gekennzeichnet,**
**dass** jede Schaltmuffe (51, 52) mittels eines vollumfänglich erstreckten Rillenkugellagers (61, 62) von der ihr zugeordneten Schiebehülse (71, 72) drehentkoppelt ist.

5. Schaltbare Getriebeanordnung nach einem der vorangehenden Ansprüche,
**dadurch gekennzeichnet,**
**dass** jede Führungsausnehmung (81, 82) der Führungshülse als ein Führungsschlitz oder eine Führungsnut ausgebildet ist.

6. Schaltbare Getriebeanordnung nach Anspruch 3 oder einem der Ansprüche 4 bis 5, soweit rückbezogen auf Anspruch 3,
**dadurch gekennzeichnet,**
**dass** die Führungshülse (80) einen die erste Führungsausnehmung (81) tragenden, ersten Axialbereich und einen die zweite Führungsausnehmung (82) tragenden, zweiten Axialbereich aufweist, zwischen denen ein Spalt (83) gebildet ist, in den hinein sich die Schneckenverzahnung (92) der Drehhülse (90) von radial innen her erstreckt.

7. Schaltbare Getriebeanordnung nach Anspruch 6,
**dadurch gekennzeichnet,**
**dass** der Spalt (83) in Umfangsrichtung begrenzt ist.

8. Schaltbare Getriebeanordnung nach Anspruch 3 oder einem der Ansprüche 4 bis 7, soweit rückbezogen auf Anspruch 3,
**dadurch gekennzeichnet,**
**dass** die den Schiebehülsen (71, 72) zugeordneten Axialschlitze der Drehhülse (90) als zwei Axialabschnitte eines durchgehenden Axialschlitzes (91) ausgebildet sind.

9. Schaltbare Getriebeanordnung nach einem der vorangehenden Ansprüche,
**dadurch gekennzeichnet,**
**dass** jedes Koppelrad (41, 42) das Hohlrad (312, 322) eines jeweils eine Sonne (311, 321), ein Hohlrad (312, 322) und einen Steg (313, 323) mit Planetenrädern (314, 324) umfassenden Planetensatzes (31, 32) ist.

10. Schaltbare Getriebeanordnung nach den Ansprüchen 3 und 9,
**dadurch gekennzeichnet,**
**dass** das Zentralrad (40) ein mit dem Steg (313) eines der Planetensätze (31) drehfest verbundenes Rad ist.

11. Schaltbare Getriebeanordnung nach Anspruch 3 und einem der Ansprüche 9 bis 10, **dadurch gekennzeichnet,**
**dass** das Zentralrad (40) ein mit der Sonne (321) eines der Planetensätze (32) drehfest verbundenes Rad ist.

12. Schaltbare Getriebeanordnung nach einem der vorangehenden Ansprüche,
**dadurch gekennzeichnet,**
**dass** jede Schiebehülse (71, 72) über den Umfang verteilt eine Mehrzahl von Führungszapfen (711, 721) aufweist, die eine gleiche Anzahl korrespondierend angeordneter Axialschlitze (91) der Drehhülse (90) durchgreifen und in eine gleiche Anzahl korrespondierend angeordneter Führungsausnehmungen (81, 82) oder Abschnitte je einer Führungsausnehmung (81, 82) der Führungshülse (80) eingreifen.

## Claims

1. Shiftable transmission arrangement, comprising a housing and an externally splined central gear (40) and a first coupling gear (41) which is arranged on one side of the central gear (40), is identically externally splined and can rotate about the same rotational axis, which gears (40, 41) can be coupled to one another in a torque-transmitting manner by means of a first axial displaceable selector sleeve (51) which engages around them coaxially and is correspondingly internally splined, the first selector sleeve (51) being mounted in a coaxial, first sliding sleeve (71) in a rotationally decoupled and axially fixed manner, which first sliding sleeve (71) has at least one radially outwardly directed guide pin (711) which engages into a first guide recess (81) of a selector drum, **characterized in that** the guide pin (711) penetrates, in a tangentially positively locking way, an axial slot (91) of a coaxial rotary sleeve (90) which is mounted on the housing in an axially fixed and rotatable manner, and the selector drum is configured as a guide sleeve (80) which is fixed on the housing, engages coaxially around the rotary sleeve (90) in axial regions, and on the inner circumference of which the first guide recess (81) extends in the circumferential direction, the rotary sleeve (90) having, in an axial region which is not covered radially by the guide sleeve (80), a worm toothing system (92) which extends in the circumferential direction and meshes with the threaded spindle (93) which is mounted on the housing such that it can be rotated about its spindle axis.

2. Shiftable transmission arrangement according to Claim 1, **characterized in that** the threaded spindle (93) is coupled to an electric actuating motor, by means of which it can be rotated in a motorised manner.

3. Shiftable transmission arrangement according to either of the preceding claims, **characterized in that** an identically externally splined second coupling gear (42) which can be rotated about the same rotational axis is arranged on the other side of the central gear (40), which second coupling gear (42) can be coupled in a torque-transmitting manner to the central gear (40) by means of a correspondingly internally splined, axially displaceable, second selector sleeve (52) which engages coaxially around the second coupling gear (42) and the central gear (40), the second selector sleeve (52) being mounted in a coaxial, second sliding sleeve (72) in a rotationally decoupled and axially fixed manner, which second sliding sleeve (72) has at least one radially outwardly directed guide pin (721) which penetrates an axial slot (91) of the rotary sleeve (90) in a tangentially positively locking way, and engages into a second guide recess (82), extending in the circumferential direction, of the guide sleeve (80).

4. Shiftable transmission arrangement according to one of the preceding claims, **characterized in that** each selector sleeve (51, 52) is rotationally decoupled from the sliding sleeve (71, 72) which is assigned to it by means of a deep groove ball bearing (61, 62) which extends over the full circumference.

5. Shiftable transmission arrangement according to one of the preceding claims, **characterized in that** each guide recess (81, 82) of the guide sleeve is configured as a guide slot or a guide groove.

6. Shiftable transmission arrangement according to Claim 3 or either of Claims 4 and 5, if referring back to Claim 3, **characterized in that** the guide sleeve (80) has a first axial region which supports the first guide recess (81) and a second axial region which supports the second guide recess (82), between which a gap (83) is formed, into which the worm toothing system (92) of the rotary sleeve (90) extends from the radial inside.

7. Shiftable transmission arrangement according to Claim 6, **characterized in that** the gap (83) is limited in the circumferential direction.

8. Shiftable transmission arrangement according to Claim 3 or one of Claims 4 to 7, if referring back to Claim 3, **characterized in that** the axial slots of the rotary sleeve (90) which are assigned to the sliding sleeves (71, 72) are configured as two axial portions of a continuous axial slot (91).

9. Shiftable transmission arrangement according to one of the preceding claims, **characterized in that** each coupling gear (41, 42) is the internal gear (312, 322) of a planetary set (31, 32) which in each case comprises a sun (311, 321), an internal gear (312, 322) and a spider (313, 323) with planetary gears (314, 324).

10. Shiftable transmission arrangement according to Claims 3 and 9, **characterized in that** the central gear (40) is a gear which is connected fixedly to the spider (313) of one of the planetary sets (31) for conjoint rotation.

11. Shiftable transmission arrangement according to Claim 3 and either of Claims 9 and 10, **characterized in that** the central gear (40) is a gear which is connected fixedly to the sun (321) of one of the planetary sets (32) for conjoint rotation.

12. Shiftable transmission arrangement according to one of the preceding claims, **characterized in that** each sliding sleeve (71, 72) has, distributed over the circumference, a plurality of guide pins (711, 721) which engage through an identical number of correspondingly arranged axial slots (91) of the rotary sleeve (90) and engage into an identical number of correspondingly arranged guide recesses (81, 82) or portions of in each case one guide recess (81, 82) of the guide sleeve (80).

## Revendications

1. Agencement de transmission commutable, comprenant un boîtier ainsi qu'une roue centrale (40) à denture emboîtable extérieure et une première roue de couplage (41) agencée d'un côté de la roue centrale (40), à denture emboîtable extérieure de même type, rotative autour du même axe de rotation, qui peuvent être couplées l'une à l'autre avec transmission du couple de rotation au moyen d'un premier manchon de commutation (51) déplaçable axialement, à denture emboîtable intérieure correspondante, qui les entoure coaxialement, le premier manchon de commutation (51) étant monté de manière découplée en rotation et de manière axialement fixe dans une première douille coulissante coaxiale (71) qui présente au moins un tenon de guidage (711) orienté radialement vers l'extérieur, qui s'engage dans un premier évidement de guidage (81) d'un rouleau de commutation,
**caractérisé en ce que**
le tenon de guidage (711) traverse de manière tangentielle par complémentarité de forme une fente axiale (91) d'une douille rotative (90) coaxiale, montée de manière axialement fixe et de manière rotative sur le boîtier, et le rouleau de commutation est réalisé sous la forme d'une douille de guidage (80) solidaire du boîtier, entourant coaxialement la douille rotative (90) par zones axiales, sur la circonférence intérieure de laquelle s'étend le premier évidement de guidage (81) dans la direction circonférentielle, la douille rotative (90) présentant, dans une zone axiale non recouverte radialement par la douille de guidage (80), une denture à vis sans fin (92) s'étendant dans la direction circonférentielle, qui engrène avec une broche filetée (93) montée sur le boîtier de manière rotative autour de son axe de broche.

2. Agencement de transmission commutable selon la revendication 1, **caractérisé en ce que** la broche filetée (93) est couplée à un servomoteur électrique, au moyen duquel elle peut être tournée par moteur.

3. Agencement de transmission commutable selon l'une quelconque des revendications précédentes, **caractérisé en ce que**, de l'autre côté de la roue centrale (40), est agencée une deuxième roue de couplage (42) à denture emboîtable extérieure de même type, rotative autour du même axe de rotation, qui peut être couplée à la roue centrale (40), avec transmission du couple de rotation, au moyen d'un deuxième manchon de commutation (52) déplaçable axialement, à denture emboîtable intérieure correspondante, entourant coaxialement la deuxième roue de couplage (42) et la roue centrale (40), le deuxième manchon de commutation (52) étant monté de manière découplée en rotation et de manière axialement fixe dans une deuxième douille coulissante coaxiale (72), qui présente au moins un tenon de guidage (721) orienté radialement vers l'extérieur, qui traverse de manière tangentielle par complémentarité de forme une fente axiale (91) de la douille rotative (90) et qui s'engage dans un deuxième évidement de guidage (82) de la douille de guidage (80) s'étendant dans la direction circonférentielle.

4. Agencement de transmission commutable selon l'une quelconque des revendications précédentes, **caractérisé en ce que** chaque manchon de commutation (51, 52) est découplé en rotation de la douille coulissante (71, 72) qui lui est associée au moyen d'un roulement à billes à gorge profonde (61, 62) qui s'étend sur toute la circonférence.

5. Agencement de transmission commutable selon l'une quelconque des revendications précédentes, **caractérisé en ce que** chaque évidement de guidage (81, 82) de la douille de guidage est réalisé sous la forme d'une fente de guidage ou d'une rainure de guidage.

6. Agencement de transmission commutable selon la revendication 3 ou selon l'une quelconque des revendications 4 à 5, dans la mesure où elles se rapportent à la revendication 3, **caractérisé en ce que** la douille de guidage (80) présente une première zone axiale portant le premier évidement de guidage (81) et une deuxième zone axiale portant le deuxième évidement de guidage (82), entre lesquelles est formé un intervalle (83) dans lequel s'étend radialement vers l'intérieur la denture de vis sans fin (92) de la douille rotative (90).

7. Agencement de transmission commutable selon la revendication 6, **caractérisé en ce que** l'intervalle (83) est limité dans la direction circonférentielle.

8. Agencement de transmission commutable selon la revendication 3 ou selon l'une quelconque des revendications 4 à 7, dans la mesure où elles se rapportent à la revendication 3, **caractérisé en ce que** les fentes axiales de la douille rotative (90) associées aux douilles coulissante (71, 72) sont réalisées sous la forme de deux sections axiales d'une fente axiale continue (91).

9. Agencement de transmission commutable selon l'une quelconque des revendications précédentes, **caractérisé en ce que** chaque roue de couplage (41, 42) est la couronne (312, 322) d'un train planétaire (31, 32) comprenant respectivement une roue solaire (311, 321), une couronne (312, 322) et une entretoise (313, 323) avec des satellites (314, 324).

10. Agencement de transmission commutable selon les revendications 3 et 9, **caractérisé en ce que** la roue centrale (40) est une roue reliée de manière solidaire en rotation à l'entretoise (313) de l'un des trains planétaires (31).

11. Agencement de transmission commutable selon la revendication 3 et selon l'une quelconque des revendications 9 à 10, **caractérisé en ce que** la roue centrale (40) est une roue reliée de manière solidaire en rotation à la roue solaire (321) de l'un des trains planétaires (32).

12. Agencement de transmission commutable selon l'une quelconque des revendications précédentes, **caractérisé en ce que** chaque douille coulissante (71, 72) présente une pluralité de tenons de guidage (711, 721) répartis sur la circonférence, qui traversent un nombre identique de fentes axiales (91) agencées de manière correspondante des douilles rotatives (90) et qui s'engagent dans un nombre identique d'évidements de guidage (81, 82) agencés de manière correspondante ou de sections respectives d'un évidement de guidage (81, 82) de la douille de guidage (80) .
